(19) Europäisches Patentamt
European Patent Office
Office européen des brevets

(11) Publication number : **0 076 691 B2**

(12) **NEW EUROPEAN PATENT SPECIFICATION**

(45) Date of publication of the new patent specification : **18.11.93 Bulletin 93/46**

(51) Int. Cl.$^5$ : **C08F 8/32,** C08F 8/48, C08F 20/08

(21) Application number : **82305285.7**

(22) Date of filing : **05.10.82**

(54) **Anhydride polymers and imide polymers and processes for preparing them.**

(30) Priority : **07.10.81 US 309298**

(43) Date of publication of application : **13.04.83 Bulletin 83/15**

(45) Publication of the grant of the patent : **10.09.86 Bulletin 86/37**

(45) Mention of the opposition decision : **18.11.93 Bulletin 93/46**

(84) Designated Contracting States : **BE CH DE FR GB IT LI NL SE**

(56) References cited :
**DE-A- 1 928 055**
**FR-A- 2 393 818**
**US-A- 3 137 660**
**US-A- 3 557 070**

(56) References cited :
**US-A- 4 246 374**
**EUROPEAN POLYMER JOURNAL, Vol. 7, 1971, pp. 561-568**
**JOURNAL OF POLYMER SCIENCE; Part A-1, Vol. 7, 1969, pp. 1717-1718**
**JOURNAL OF AMERICAN CHEMICAL SOCIETY, Vol. 80, 1958, pp. 5464-5465**

(73) Proprietor : **ROHM AND HAAS COMPANY**
**Independence Mall West**
**Philadelphia Pennsylvania 19105 (US)**

(72) Inventor : **Kopchik, Richard Michael**
**1335 Stephen Way**
**Southampton Pennsylvania 18966 (US)**

(74) Representative : **Angell, David Whilton et al**
**ROHM AND HAAS (UK) LTD. European Operations Patent Department Lennig House**
**2 Mason's Avenue**
**Croydon CR9 3NB (GB)**

EP 0 076 691 B2

## Description

This invention is concerned with imide polymers and processes for preparing them.

U.S.-A 4,246,374 discloses polymers containing imide units of any desired degree of imidization made without the use of added water or solvent, using an extruder to which is fed polymers containing units derived from esters of acrylic or methacrylic acid.

D.H. Grant et al, Polymer *1*, 125 (1960), discloses the preparation of polyglutaric anhydride which is shown as being crosslinked and hence would be insoluble in dimethyl formamide ("DMF"), would not be processable, and would not be injection moldable

J.C. Hwa et al. Am. Chem. Soc., Div. Polymer Chem., Preprints, *4*, (1) 56 (1963), and A. Crawshaw and S.B. Butler, J. Am. Chem. Soc., *80*, 5464 (1958), show uncrosslinked polyglutaric anhydride, not soluble in DMF, but rather is only swellable- in DMF, and is not thermally stable; its onset of decomposition temperature is only 172-175°C., and thus it would not be considered to be a processable product.

U.S.-A 2,146,209, discloses imidization using urea as a source of ammonia, and shows going directly from an acid to an imide. though not through the glutaric anhydride, and not in an extruder.

U.S.-A 3,244,679 and 3,284,425 show autoclave processes requiring lengthy heating time in the presence of inert dissolving or suspending solvent.

FR-A-2393818 discloses imidization of polymers containing the functional groups carboxyl, amide, alkyl ester or nitrile using ammonia, a primary amine or hydroxylamine and no attempt is made to avoid alkyl substitution on the nitrogen group of the imidised product. The imide polymers of the prior art have not been free of methyl substitution.

We have now found that certain anhydride polymers are imidizable to imide polymers which are thermally stable and processable and are free from methyl substitution on the nitrogen atom. We have also found processes for making the imide polymers.

A process for producing thermoplastic, non-crosslinked polymer containing glutaric anhydride units of the formula

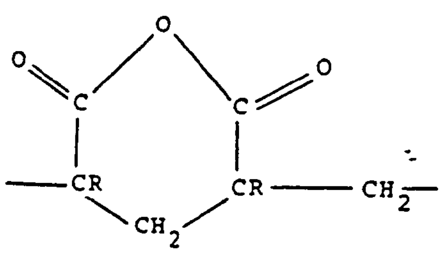

wherein R represents $CH_3$ or H, said polymer being soluble in dimethyl formamide, having thermal stability as defined by an onset of decomposition temperature of at least 250°C., and processability as defined by a Vicat temperature of 50°C to 175°C comprises devolatilizing, in an extruder in the absence of dehydrating agent, polymer containing acrylic acid and/or methacrylic acid units to form the anhydride units.

The invention comprises a process of imidizing the anhydride polymer in an extruder with ammonia which may be provided in the form of an ammonia generator. The invention provides imide polymers wherein the imide units comprise or consist of imide units free from methyl substitution on the nitrogen atom which may be made by this imidization process. The anhydride polymers may be prepared by devolatilizing an acrylic or methacrylic acid-containing polymer. This may be effected in an extruder and the resulting polymer may be imidised by introducing at a downstream vent port ammonia or an ammonia generator.

The glutaric anhydride-containing polymers are non-crosslinked and thermoformable and yet may be highly thermally stable, processable, and injection moldable, so that they can be used as engineering plastics. The glutaric anhydride containing polymer may for example contain from 1 to 100% by weight of the anhydride units.

The glutaric anhydride polymers may be prepared in the extruder by introducing polymer containing acrylic acid and/or methacrylic acid units either as granules or as a solution in monomer and/or other solvent, preferably maintaining a temperature of about 200-300°C., and applying negative pressure at a vent port so as to devolatilize, removing water. The anhydride can be easily prepared without catalyst, and it is preferred to use none; however, metal catalysts which promote anhydride formation can be used if desired.

The acid-containing polymer can be a homopolymer of methacrylic acid or acrylic acid, a copolymer of the two or a copolymer of one or both acids with one or more other ethylenically unsaturated monomers. The other ethylenically unsaturated monomers can be any which are copolymerizable therewith such as, for example. styrene, substituted styrenes, such as bromostyrene and chlorostyrene, olefins such as ethylene and propylene, salts of acrylic and methacrylic acids such as calcium and sodium salts, esters of acrylic and methacrylic acids such as methyl acrylate, ethyl acrylate, butyl acrylate, ethyl methacrylate, butyl methacrylate, isobutyl methacrylate, isodecyl methacrylate, lauryl methacrylate, steryl methacrylate, 2-hydroxyethyl methacrylate, hydroxypropyl methacrylate, dimethylaminoethyl methacrylate, 2-bromoethyl methacrylate, 2-bromoethyl acrylate, cyclohexyl methacrylate and cyclohexyl acrylate. Also useful are salts, esters, ethers and amides of allyl alcohols and vinyl alcohols such as allyl ether, allyl chloride, allyl alcohol itself, vinyl chloride, vinyl acetate, allyl bromide, allyl acetate, n-methyl methacrylamide and n-butyl acrylamide. Also, vinyl pyridine, vinyl benzoate, vinyl chloroacetate, vinyl decyl ether, 2-methoxyethyl vinyl ether, vinyl toluene, vinyl-n-propyl ether, vinyl bromide, vinyl fluoride, vinylidene chloride and vinylidene fluoride may be used.

The preferred starting polymers contain at least 50% by weight of units derived from acrylic and/or methacrylic acid, preferably at least 70%, and more preferably 80 to 90% of such units. The comonomers which are preferred are styrene or ethylene, preferably in an amount of 5 to 20% of the total units, and/or methyl methacrylate in an amount of 1 to 10% of the total units. Between the two essential acid monomers methacrylic acid is preferred.

The starting polymer can be prepared by conventional solution, suspension, or bulk cast processes, and can be continuously produced and introduced to the devolatilizing extruder to produce the glutaric anhydride polymer continuously. As mentioned, the acid-containing polymer can be introduced as granules ("dry feed") or as a solution in monomer ("wet feed").

The same extruder can be used to prepare the glutaric anhydride and to prepare the imide polymer from it; or separate extruders can be used. The extruder should be one which has good devolatilization characteristics; examples are as those made by Welding Engineers, American Liestritz, or Werner-Pfliederer.

The imide polymer can be prepared from the anhydride polymer by introducing at an addition port, ammonia or an ammonia generator in any way similar to that described in U.S.-A 4246374. However, surprisingly a much lower pressure can be used in the process of the present invention to prepare the corresponding imide polymer. and the product can thereby be made more uniform. A particular advantage is that imide polymers which are free of methyl-substituted imides can be prepared from ammonia or ammonia generators. This could not be done in the prior art process because of side reactions.

The low pressures which were referred to above are gauge pressures of about $0.685 \times 10^6$ to $2.055 \times 10^6$ $N/m^2$ (100 to 300 psi) with as low as $1.37 \times 10^6 N/m^2$ (200 psi) preferred.

In practice, the previous process typically required about $3.452 \times 10^6$ to $13.7 \times 10^6 N/m^2$ (500 to 2,000 psi).

The temperature will be kept high enough to transport the imide, typically about 200 to 300°C.. and one or more vents should be kept at negative pressure to remove unreacted ammonia.

The ammonia generators can for example be urea, substituted urea, formamides, or an aqueous solution of ammonia, and can be in liquid but are preferably in solid form.

The ammonia generators are preferably added in sufficient excess so as to completely imidize the glutaric anhydride polymer. A stoichiometric excess of 5 to 20% of the amine or ammonium reagent is adequate in most cases for essentially total conversion of the anhydride units to imide units.

The imide polymers so produced have utility as engineering plastics. These polymers can have a balance of high service temperature. good thermal stability, processability, high strength, and high modulus which makes them ideal for use as engineering plastics where strength properties under harsh use conditions for long periods of time are important. For example, as polymers for "under the hood" automotive applications, for use as structural parts of electric motor housings, and for components of high performance aircraft. Various additives and modifiers can be employed in the imide composition as made apparent by U.S.-A 4246374.

Thus the process of the invention produces polymers containing imide units free from methyl groups substituted on the nitrogen atom and the invention also extends to the most preferred class of polymers themselves, that is to say those which are at least substantially free from any units of the formula:

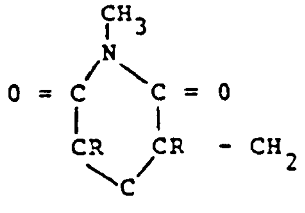

wherein R is H or $CH_3$.

To illustrate the invention further, the following non-limiting examples are presented. All parts and percentages are by weight unless otherwise indicated.

Example 1

A polymer solution containing 40 weight percent of a copolymer of 86% methacrylic acid (MAA) and 14% styrene (S) at 150°C was added at a gauge pressure of 1.37 x $10^6$ N/$m^2$ (200 psig) to the feed port of a counter rotating tangential twin screw extruder. This solution was added at a rate of 80 g/min. This solution was conveyed down the barrel of the extruder through a devolatilization zone at atmospheric pressure and then a devolatilization zone at 0.635 m (25 inches) of mercury of vacuum. Each of these zones being 12 barrel diameters long 0.24 m (9.6 inches). At the end of these two devolatilization zones the polymer was almost free of liquids (residual volatiles less than ½ weight percent) and most adjacent MAA groups had combined to form six member anhydride units. The resulting water was removed with the solvents in the devolatilization zone. In a liquid addition zone a solution of 50% urea in water was added to the anhydride polymer melt. This material was well mixed into the polymer melt and reacted to transform the anhydride units to imide units. After leaving the reaction zone, which was 24 barrel diameters in length 0.49 (19.2 inches) the water and other liquids and vapours were removed in a devolatilization zone, 12 barrel diameter long 0.24 m (9.6 inches) kept at 0.635 m (25 inches) of mercury of vacuum. The resulting polymer then left the extruder through a strand die, was cooled and then pelletized. The product from this process was collected at 32 g/min. The resulting polymer has a nitrogen content of 5.79% and a composition of methacrylic acid/styrene/methacrylamide (23/14/63). This material had a Vicat temperature of 195°C, was soluble in DMF, had a 1% decomposition temperature (in nitrogen) of 350°C, and a melt flow rate (condition modified C) of 20.

Example 2

As described in Example 1 as far as the second devolatilization zone. At the end of this zone the anhydride polymer left the extruder through a strand die. The resulting polymer was soluble in DMF, had a 1% decomposition temperature (in nitrogen) of 340°C and a Vicat temperature of 163°C. The IR spectrum showed the two bands at 1800 and 1758 $cm^{-1}$ characteristic of the six membered ring anhydride from polymethacrylic acid (D.H. Grant and N. Grassie, Polymer *1*, 125 (1960).

Example 3

The polymer from example 2 was fed into the solid feed port of a counter rotating tangential twin screw extruder. The polymer passed from the melt down zone into a reaction zone where it was mixed with a 50 percent solution of urea in water added through a liquid addition port. This reaction zone was 24 barrel diameters in length 0.49 m (19.2 inches). The polymer was transported from the reaction zone into a devolatilization zone which was 12 barrel diameter 0.24 m (0.96 inches) long. In this zone the polymer was exposed to a vacuum of 0.635 m (25 inches of mercury). The water and other vapours were removed from the polymer melt at a temperature of 325°C. The polymer then left the extruder through a strand die. The polymer produced was identical to that produced in example 1.

Example 4

Polymethacrylic acid with a molecular weight of 150,000 in a finely divided form was added to the feed part of a twin screw extruder. This polymer was converted to a melt and conveyed into a series of two devolatilization zones; the first of which was at atmospheric pressure and the second of which was at 0.71 m (28 inches) of mercury vacuum. In these zones a chemical reaction took place in which adjacent acid groups formed six member cyclic anhydrides. The resulting water was removed from the melt in the devolatilization zone. The polymeric anhydride was carried into a reaction zone where it was mixed with a water solution of ammonia, which was added through a liquid addition port at 1.97 x $10^6$ N/$m^2$ (280 psig). The resulting mixture was conveyed through a reaction zone 18 barrel diameters in length 0.37 m (14.4 inches). In this zone the anhydride units were converted to six membered cyclic imide units. In a final devolatilization zone the polymer materials in the melt were removed with a vacuum of 0.71 m (28 inches) of mercury. The resulting imide polymer left the extruder through a strand die. This polymer was soluble in DMF, had a 1 % decomposition temperature (in nitrogen of 350°C, a Vicat temperature of 235°C, and a melt flow rate (condition modified C) of 10.

Example 5

As described in example 4 as far as the second devolatilization zone. At the end of this zone the anhydride polymer left the extruder. The resulting polymer was soluble in DMF, had a 1% decomposition temperature (in nitrogen) of 335°C, a Vicat temperature of 166°C, and a melt flow rate (condition modified C) of 40.

Example 6

The polymer from example 5 was fed into the solid feed port of a twin screw extruder. The polymer melt was transported into an 18 barrel diameter 0.37 m (14.4 inches) reaction zone in which it was mixed with a solution of ammonia in water. The resulting polymer was extruded at 32 g/min. to give a polymer identical with that from examples 4.

Examples 7 to 33

A polymer solution was fed into the pressurized feed port of a twin screw extruder. This solution was devolatilized in a two section devolatilization zone 0.71 m (at 1 atmosphere and at 28 inches of mercury vacuum). A reactive feed was then mixed with the resulting anhydride polymer in a reaction zone. The product imide was then devolatilized with a vacuum vent and the resulting polymer extruded through a strand die.

| Example No. | Monomer Unit | Polymer Feed<br>Composition of Polymer | Reactive Liquid Feed |
|---|---|---|---|
| 7 | MAA/S | 98/2 | urea/water |
| 8 | MAA/S | 70/30 | " |
| 9 | MAA/AA | 80/20 | " |
| 10 | MAA/E | 95/5 | " |
| 11 | MAA/AA/S | 90/5/5 | " |
| 12 | MAA/MMA | 85/15 | " |
| 13 | MAA/MMA/S | 80/10/10 | " |
| 14 | MAA/EA | 85/15 | " |
| 15 | MAA/AA | 20/80 | " |
| 16 | MAA | 100 | " |
| 17 | AA/MMA/S | 80/10/10 | " |
| 18 | MAA | 100 | ammonia in water |
| 19 | MAA/MMA/S | 85/5/10 | " |
| 20 | MAA | 100 | anhydrous ammonia |
| 21 | MAA/S | 95/5 | " |
| 22 | MAA/S | 95/5 | formamide |
| 23 (Comparative) | MAA/MMA/S | 85/5/10 | methylamine in water |
| 24 ( " ) | MAA | 100 | " |
| 25 ( " ) | MAA | 100 | anhydrous methylamine |
| 26 ( " ) | MAA/S | 95/5 | " |
| 27 ( " ) | MAA/E | 95/5 | methylamine in acetone |
| 28 ( " ) | MAA/AA/S | 80/10/10 | 1,4-dimethylurea in water |
| 29 | MMA/S | 95/5 | n-butylamine |
| 30 | " | " | n-dodecylamine |
| 31 | " | " | cyclohexylamine |
| 32 | " | " | aniline |
| 33 | " | " | allylamine |
| 34 | " | " | 1-amino-2-dimethylamino ethane |

For examples 7 to 28 the resulting polymer was found to have over 75% of adjacent acid pairs (MAA or AA) converted to the six member cyclic imide structure, to be soluble in DMF, to have a 1% weight loss temperature in air of greater than 285°C, a melt flow rate (condition modified C) of between 50 and 1, and a Vicat temperature of over 150°C.

For examples 7 to 22 the imide unit present in the polymer is unsubstituted. (There is a hydrogen on the

nitrogen atom.)

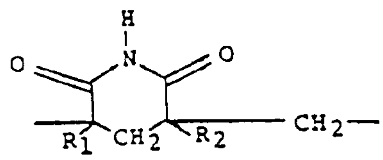

For examples 23 to 28 the imide unit present in the polymer is methyl substituted (there is a methyl group on the nitrogen atom.)

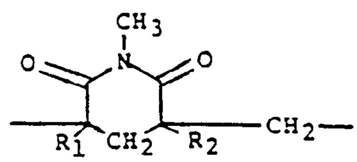

For examples 29 to 34 the resulting polymers had over 50% of the anhydride units converted to imide units, were soluble in DMF, and had a 1% weight loss temperature in air of greater than 285°C.

The Vicat temperature of examples 29 thru 34 were

| | Vicat Temperature |
|---|---|
| 29 | 100°C |
| 30 | Less than 20°C |
| 31 | 200°C |
| 32 | 240°C |
| 33 | 195°C |
| 34 | 180°C |

In example 34 great care had to be taken to remove the trace amounts of 1,2-diamino ethane from the 1-amino-2-dimethylamino ethane. If this was not done the trace amount of the diprimary amine resulted in crosslinking in the extruder.

## Claims

1. A process of imidizing thermoplastic non-crosslinked polymer which (a) contains glutaric anhydride units of the formula

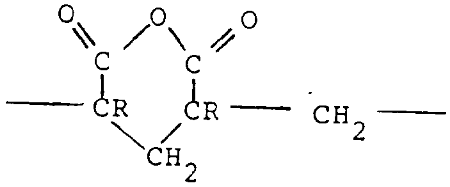

wherein R represents $CH_3$ or H and (b) is soluble in dimethyl formamide and has thermal stability as defined by an onset of decomposition temperature of at least 250°C and processability as defined by a Vicat temperature of 50°C to 175°C and (c) is obtainable by devolatilizing, in an extruder in the absence of a dehydrating agent, polymer containing acrylic acid and/or methacrylic acid units, to form the anhydride units;

to form a polymer containing imide units free from methyl groups substituted onto the nitrogen atom, comprising reacting said anhydride polymer, at a gauge pressure of from 0.685 x $10^6 N/m^2$ to 2.055 x $10^6 N/m^2$ (100 to 300 psi), in an extruder with ammonia which may be provided in the form of an ammonia generator.

2. A process according to Claim 1 using as an ammonia generator one or more of: urea, substituted urea, a formamide, or an aqueous solution of ammonia, preferably using a solid ammonia generator.

3. A process according to Claim 1 or 2 wherein the anhydride polymer also contains units of other ethylenically unsaturated monomer.

4. A process according to Claim 3 wherein said other monomer comprises styrene, ethylene and/or methyl methacrylate.

5. A process according to Claim 3 wherein the anhydride polymer contains 1 to 100% by weight of the anhydride units.

6. A process according to any of Claims 1 to 5 wherein the anhydride polymer contains 80 to 90% of said anhydride units, 5 to 20% styrene units, and 1 to 10% methyl methacrylate units, said ranges being stated to the nearest whole number according to normal mathematical practice.

7. A process for preparing polymer containing imide units free from methyl substitution on the nitrogen atom according to claim 1 wherein the anhydride polymer is reacted at a gauge pressure of 0.685 x $10^6$ to 2.055 x $10^6 N/m^2$ (100 to 300 psi) in the extruder, wherein ammonia or generator thereof is introduced at a downstream vent port of said extruder, and resulting polymer is removed from the resulting exit port of said extruder, and wherein the polymer to be devolatilized is preferably continuously produced in a reactor and continuously fed to the extruder.

8. Imide polymer obtainable by a process according to any preceding claim containing units of the formula

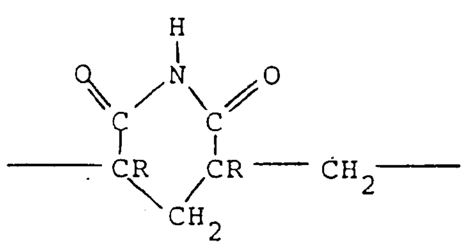

but substantially free from units of the formula

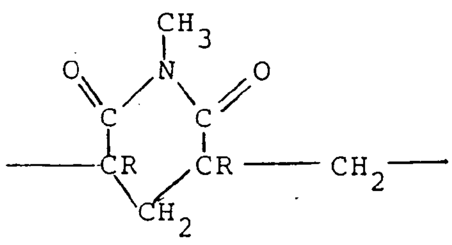

wherein R represents H or $CH_3$

**Patentansprüche**

1. Verfahren zur Imidierung eines thermoplastischen nichtvernetzten Polymers, das (a) Glutarsäureanhydrideinheiten der Formel

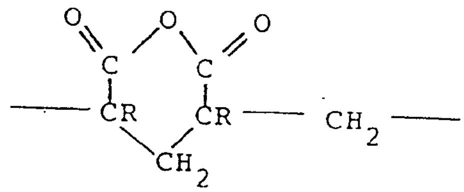

enthält, worin R für $CH_3$ oder H steht, und (b) in Dimethylformamid löslich ist, eine thermische Stabilität besitzt, definiert durch das Einsetzen einer Zersetzung bei einer Temperatur von wenigstens 250°C, und verarbeitbar ist, definiert durch eine Vicat-Temperatur von 50°C bis 175°C und (c) erhältlich ist durch Entflüchtigung in einem Extruder in Abwesenheit eines Dehydratisierungsmittels, wobei das Polymer Acrylsäure- und/oder Methacrylsäureeinheiten enthält, unter Bildung der Anhydrideinheiten, unter Bildung eines Polymers, das Imideinheiten frei von Methylsubstitutionen an dem Stickstoffatom enthält, bei dem das Anhydridpolymer bei einem Druck von $0{,}685x10^6 N/m^2$ bis $2{,}055x10^6 N/m^2$ (100 bis 300 psi) in einem Extruder mit Ammoniak umgesetzt wird, das in Form eines Ammoniakerzeugers zur Verfügung gestellt werden kann.

2. Verfahren nach Anspruch 1 unter Verwendung eines Ammoniakerzeugers aus einer oder mehreren der folgenden Substanzen: Harnstoff, substituiertem Harnstoff, einem Formamid oder einer wäßrigen Lösung von Ammoniak, vorzugsweise unter Verwendung eines festen Ammoniakerzeugers.

3. Verfahren nach Anspruch 1 oder 2, worin das Anhydridpolymer auch Einheiten eines anderen äthylenisch ungesättigten Monomers enthält.

4. Verfahren nach Anspruch 3, worin das andere Monomer Styrol, Äthylen und/oder Methylmethacrylat umfaßt.

5. Verfahren nach Anspruch 3, worin das Polymeranhydrid 1 bis 10o Gew.-% der Anhydrideinheiten enthält.

6. Verfahren nach einem der Ansprüche 1 bis 5, worin das Anhydridpolymer 80 bis 90 % der Anhydrideinheiten, 5 bis 20 % Styroleinheiten und 1 bis 10 % Methylmethacrylateinheiten enthält, wobei diese Bereiche bis zu der nächsten ganzen Zahl entsprechend üblicher mathematischer Praxis angegeben sind.

7. Verfahren zur Herstellung eines Polymers, das Imideinheiten frei von Methylsubstitutionen an dem Stickstoffatom enthält, nach Anspruch 1, worin das Anhydridpolymer bei einem Druck von $0{,}685 \times 10^6$ bis $2{,}055 \times 10^6 N/m^2$ (100 bis 300 psi) in dem Extruder umgesetzt wird, wobei Ammoniak oder ein Erzeuger davon nach der Lüftungsöffnung des Extruders eingeführt wird und das erhaltene Polymer aus der Austrittsöffnung des Extruders entfernt wird, wobei das zu entflüchtigende Polymer vorzugsweise kontinuierlich in einem Reaktor erzeugt und kontinuierlich dem Extruder zugeführt wird.

8. Imidpolymer, erhältlich durch ein Verfahren nach einem der vorhergehenden Ansprüche, enthaltend Einheiten der Formel

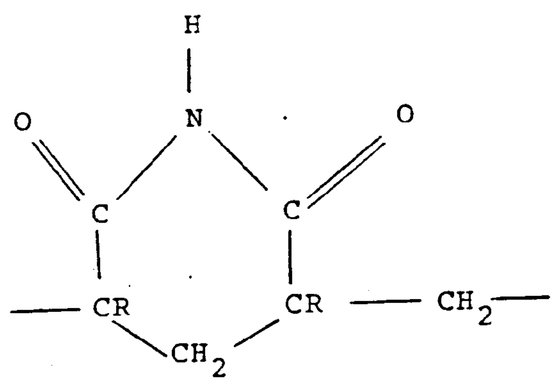

jedoch im wesentlichen frei von Einheiten der Formel

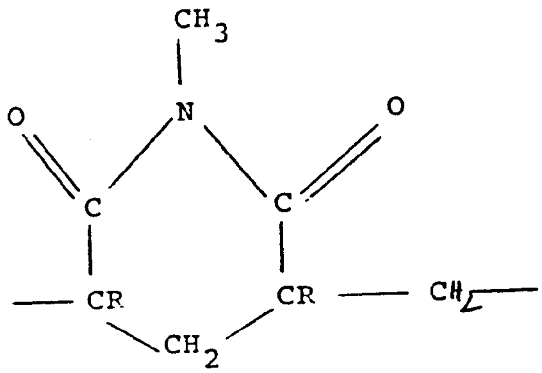

worin R für H oder $CH_3$ steht.

## Revendications

1. Procédé pour l'imidation d'un polymère thermoplastique non reticulé qui
(a) contient des motifs d'anhydride glutarique de formule:

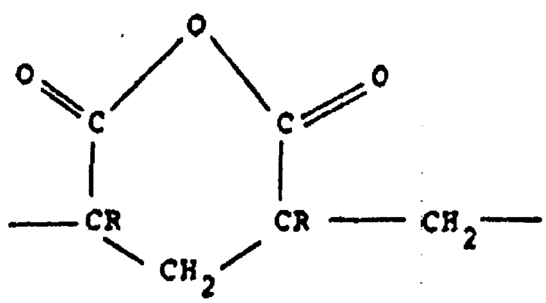

où R représente $CH_3$, ou H, et
(b) est soluble dans le diméthylformamide et possède une stabilité thermique définie par une temperature de début de décomposition d'au moins 250°C et une aptitude à la transformation comme défini par une température Vicat de 50°C a 175°C, et
(c) peut être obtenu par l'élimination des constituants volatils, dans une extrudeuse, en l'absence d'un agent déshydratant, polymère contenant des motifs d'acide acrylique et/ou d'acide méthacrylique pour former les motifs d'anhydride, pour former un polymère contenant des motifs d'imide dépourvu de groupes méthyles substituant l'atome d'azote, comprenant la réaction dudit polymère, à une pression manométrique de 0,685 X $10^6$ N/$m^2$ à 2,055 X $10^6$ N/$m^2$ (100 à 300 psi) dans une extrudeuse, avec de l'ammoniac qui peut être introduit sous forme d'un générateur d'ammoniac.

2. Procédé selon la revendication 1, utilisant comme générateur d'ammoniac un ou plusieurs de: l'urée, une urée substituée, un formamide ou une solution aqueuse d'ammoniac, de préférence utilisant un générateur solide d'ammoniac.

3. Procédé selon la revendication 1 ou 2, dans lequel le polymère d'anhydride contient également des motifs d'un autre monomère insaturé éthyléniquement.

4. Procédé selon la revendication 3, dans lequel l'autre monomère comprend du styrène, de l'éthylène et/ou du méthyle méthacrylate.

5. Procédé selon la revendication 3, dans lequel le polymère d'anhydride contient 1 à 100% en poids des motifs d'anhydride.

6. Procédé selon l'une quelconque des revendications 1 à 5, dans lequel le polymère d'anhydride contient

80 à 90% de motifs d'anhydride, 5 à 20% de motifs de styrène et 1 à 10% de motifs de méthyle méthacrylate, ces plages étant spécifiées au nombre entier le plus proche selon la pratique mathématique normale.

7. Procédé pour la préparation de polymère contenant des motifs d'imide exempts de substitution de méthyle sur l'atome d'azote selon la revendication 1, dans lequel le polymère d'anhydride est mis en réaction à une pression manométrique de 0,685 X $10^6$ N/m$^2$ à 2,055 X $10^6$ N/m$^2$ dans l'extrudeuse, dans lequel l'ammoniac ou son générateur est introduit dans un orifice de ventilation situé en aval de l'extrudeuse, et le polymère résultant est enlevé de l'orifice de sortie de l'extrudeuse, et en ce que le polymère à dévolatiliser est de préférence produit en continu dans un réacteur et alimenté en continu à l'extrudeuse.

8. Polymère d'imide pouvant être obtenu par un procédé selon l'une quelconque des revendications précédentes, contenant des motifs de la formule

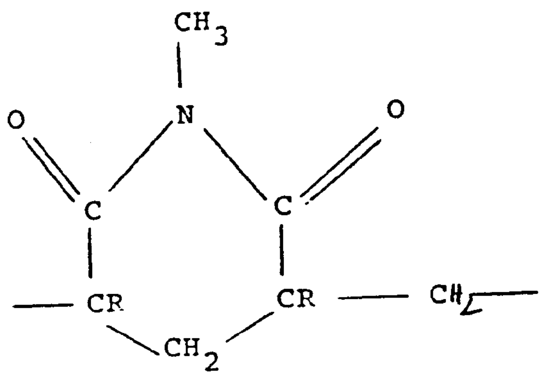

mais sensiblement exempt de motifs de la formule

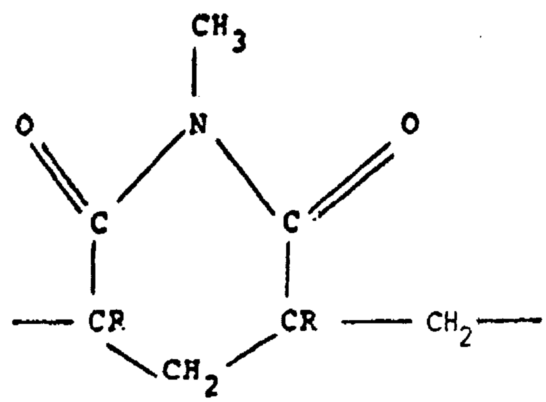

dans laquelle R représente H ou $CH_3$.